# EUROPEAN PATENT SPECIFICATION

(11) **EP 4 268 337 B1**
(45) Date of publication and mention of the grant of the patent: **22.04.2026**
(21) Application number: 21845106.0
(22) Date of filing: 23.12.2021
(51) Int. Cl.: H02G 3/08, H02G 3/14

(54) **COVERING DEVICE WHICH CAN BE COMBINED WITH AN ELECTRIC MODULE**
ABDECKVORRICHTUNG, DIE MIT EINEM ELEKTRISCHEN MODUL KOMBINIERBAR IST
DISPOSITIF DE COUVERTURE POUVANT ÊTRE COMBINÉ À UN MODULE ÉLECTRIQUE

(30) Priority: 23.12.2020 IT 202000032279
(43) Date of publication of application: 01.11.2023
(73) Proprietor: Vimar S.p.A., 36063 Marostica (VI) (IT)
(72) Inventor: MOCELLIN, Dario, 36061 Bassano Del Grappa (VI) (IT); ZAMPIERIN, Ilario, 36061 Bassano Del Grappa (VI) (IT); GASPAROTTO, Davide, 36064 Colceresa (VI) (IT); FRANCESCHETTO, Alberto, 36050 Cartigliano (VI) (IT)
(74) Representative: Locas, Davide
(86) International application number: PCT/IB2021/062251
(87) International publication number: WO 2022/137195

(56) References cited:
- WO-A1-2019/021082
- WO-A1-2019/145815
- CA-A1- 2 925 312
- CN-A- 101 507 070
- US-A- 4 733 330

## Description

The present invention relates to an electric device comprising a covering device which can be removably connected to a wall-mountable electric module.

In the context of the technical sector being referred to, there are known covering devices (also called plates or covers) which are connected to electric sockets or other modules in order to protect them, for example, from impacts or to make them more visible to a user, for example, by means of colouring or a pattern which is produced on the covering device.

In order to connect the covering device to the socket, there are generally used threaded connections or an interlocking engagement system.

The threaded connections provide a stable mechanical connection but have the disadvantage that they require a tool, for example, a screwdriver, in order to be able to dismount or mount the covering device on/from the electric socket.

However, the interlocking engagement system allows the covering device to be dismounted or mounted from/on the electric socket without using tools but it has the disadvantage of being particularly fragile. This involves a risk of the interlocking engagement system of the covering device breaking during the operation for mounting or dismounting the device on/from the electric socket. Examples of known solutions of engagement systems are set out in WO 2019/145815 or US 4,733,330 or CN101507070A.

Therefore, the technical problem addressed by the present invention is to provide a covering device which can be removably connected to an electric module which is structurally and functionally configured to at least partially overcome one or more of the disadvantages set out with reference to the cited prior art.

In the context of this problem, an object of the present invention is to provide a covering device which is particularly versatile and which can be readily connected in a removable manner to an electric socket.

Another object of the present invention is to provide a covering device which is provided with an engagement system which is particularly resistant to mechanical loads which occur during the operations for mounting and dismounting the covering device on/from the electric socket.

These problems are solved and these objects are achieved by the invention by means of an electric device according to claim 1.

According to the invention, the covering device is removably connected to an electric module comprises a body and an engagement system. The body includes a lower surface suitable for interfacing with the electric module and comprises two transverse sides, two longitudinal sides and four vertices. The engagement system includes engagement elements, each of which is positioned near a respective vertex of the body and comprises an engagement portion, a support portion and a receiving member. The engagement portion comprises a first surface which is located in a plane substantially parallel with the lower surface of the body of the covering device. Preferably, the first surface preferably comprises an oblique side which is inclined with respect to a longitudinal axis of the lower surface. The support portion extends between the lower surface of the body and the engagement portion. The receiving member is delimited by the engagement portion, the support portion and the lower surface and is formed so as to allow the insertion of a connection element of a respective connection device of the electric module.

An engagement element which is configured in this manner allows the production of a stable, reliable and robust connection with respect to the respective connection element of the electric module, particularly as a result of the formation of the receiving member which is delimited by the engagement portion, the support portion and the lower surface, and where applicable as a result of the engagement portion which is provided with an oblique side. Furthermore, the covering device to which the invention relates can be mounted and dismounted on/from an electric module in a particularly easy manner by a user. In particular, in accordance with the operating situation, the dismounting can be carried out both using a tool, such as, for example, a screwdriver, and without using tools if the operating conditions allow it. The body of the covering device can advantageously be coloured or have a printed pattern, preferably on an external surface opposite the internal surface, for example, in order to be able to more easily display and recognize a specific module, to which the device is connected. The user may also select a covering device which can be subsequently connected to the electric module with respect to the installation of the module.

Preferably, the lower surface of the body of the covering device has a square shape, even more preferably a substantially rectangular shape. Advantageously, the electric module on which the covering device is mounted forms part of an electric device which can in turn be mounted on a support, the support advantageously being able to be combined with a plate. Preferably, the body of the covering device has such dimensions as to allow a combination with the plate, advantageously in such a manner that the longitudinal side of the body has dimensions which substantially correspond to an internal opening of the plate, Preferably, the lower surface comprises a pair of longitudinal sides and a pair of transverse sides. The longitudinal side preferably has a length between 4.5 cm and 5.5 cm. The transverse side preferably has a length between 1.5 cm and 2.5 cm.

Preferably, the body of the covering device is made from polymer material.

Advantageously, the lower surface is substantially planar, that is to say, it has a planar extent. This affords a plurality of advantages, including: ease of printing, simplicity of mounting on the electric socket and structural strength, also as a result of the absence of elements which particularly project from the surface.

The engagement elements are arranged near the vertices of the body.

There are present four engagement elements. Advantageously, these elements are positioned so as to be aligned in pairs both in a longitudinal direction and in a transverse direction, defining between them a longitudinal distance, preferably between 3 cm and 5 cm, and a transverse distance, preferably between 0.5 cm and 2.5 cm.

Advantageously, a first pair of engagement elements is opposite and preferably symmetrical with respect to a second pair of engagement elements with respect to a plane which extends through the longitudinal axis of the lower surface of the body and perpendicular to the surface.

Advantageously, a third pair of engagement elements is opposite and preferably symmetrical relative to a fourth pair of engagement elements with respect to a plane which extends through a transverse axis of the lower surface of the body and perpendicular to the surface.

The longitudinal axis of the lower surface is advantageously equidistant from the longitudinal sides of the surface and is located in the plane defined by the surface.

The transverse axis of the lower surface is advantageously equidistant from the transverse sides of the lower surface and is located in the plane defined by the surface.

The lower surface of the body is the surface which faces the electric module or the surface directed towards the module during the operation for mounting the covering device on the module.

The support portion is interposed between the engagement portion and the lower surface.

Advantageously, the distance between the lower surface of the body and the first surface of the engagement portion is between 0.2 cm and 0.6 cm.

Preferably, an oblique edge extends at the oblique side and in a direction perpendicular to the first surface. Advantageously, the oblique side may have a curvature which is directed towards the longitudinal axis of the lower surface or which is directed in the opposite direction. Consequently, the oblique edge may preferably be concave or convex. Advantageously, the oblique edge may have a bevel. This bevel serves to further simplify the operation of mounting and dismounting the covering device on/from the electric socket.

Preferably, the oblique side is inclined by a first angle with respect to the longitudinal axis of the lower surface. Advantageously, the value of the first angle is between approximately 30° and 60°, more advantageously it is approximately 45°. Preferably, the oblique edge is inclined with respect to a plane which extends through the longitudinal axis of the lower surface and which is perpendicular to the surface. This inclination advantageously corresponds to the value of the above-mentioned first angle.

Advantageously, the value of the first angle is substantially the same for the oblique side and consequently the oblique edge of each engagement element. The Applicant has established that the first angle between the above-mentioned values allows the production of a particular robustness of the engagement element during the operations for mounting the covering device on the electric module. Furthermore, these values allow the oblique edge to provide a particularly stable socket with a respective connection element of the electric module when the connection between the covering device and the module is brought about.

Preferably, the receiving member is accessible at the side directed towards a centre of the lower surface of the body of the covering device. The centre is preferably defined by the intersection of the longitudinal axis and the transverse axis of the lower surface. In other words, the receiving member is accessible from the side directed towards the longitudinal axis of the lower surface or towards the openings of the body of the covering device. It is possible to provide alternative embodiments in which the receiving member is accessible at the opposite side to the centre of the lower surface of the covering device.

According to another aspect of the invention, the support portion comprises a first wall which is parallel with the longitudinal axis and a second wall which is perpendicular to the longitudinal axis and which is adjacent to the first wall.

The first and second walls are interposed between the engagement portion and the lower surface. Advantageously, the first wall and the second wall are perpendicular both to the first surface of the engagement portion and to the lower surface.

Preferably, the distance between the first wall and the nearest of the longitudinal sides is between 3 mm and 5 mm. Advantageously, the distance between the second wall and the nearest of the transverse sides is between 3 mm and 5 mm.

Advantageously, the first wall and the second wall are perpendicular to each other. In some embodiments, a connection constructed between the walls may be provided.

In some embodiments, the first surface extends in a substantially planar manner and preferably has a first side perpendicular to the longitudinal axis of the lower surface and a second side parallel with the longitudinal axis of the lower surface so that the first surface is formed with a substantially triangular shape. Advantageously, the first wall of the support portion extends between the lower surface and the first side and the second wall of the support portion extends between the lower surface and the second side. Preferably, the oblique side has a length between 0.3 cm and 0.7 cm, the first side has a length between 0.2 cm and 0.8 cm and the second side has a length between 0.1 cm and 0.5 cm.

In a preferred embodiment, at least one of the first and second walls may include a channel. This channel is advantageously formed at a free end of a wall or the end which is not adjacent to the other wall. This channel may, for example, serve to allow the positioning of portions of the electric socket when the connection is established between the socket and the covering device.

In other embodiments, the support portion may be configured with a curved form or with an irregular form.

According to another aspect of the invention, the body comprises a frame which projects with respect to the lower surface and which extends along the sides of the lower surface. The frame includes two opposite longitudinal components and two opposite transverse components.

Preferably, the frame extends perpendicularly with respect to the lower surface. Advantageously, the frame is interposed between the lower surface of the body and the plane in which the first surface of the engagement portion is located.

Preferably, the support portion comprises a lower zone which is included in the frame and an upper zone which projects from the frame. In other words, the support portion is advantageously at least partially formed in the frame. This arrangement is particularly advantageous in order to simplify the geometry. Advantageously, the first wall is at least partially contained in the longitudinal component of the frame. In other embodiments, the second wall is preferably at least partially contained in the transverse component of the frame. In other embodiments, the first wall is advantageously at least partially contained in the longitudinal component of the frame and the second wall is at least partially contained in the transverse component of the frame. In other words, a lower portion of the first wall or of the second wall or of both walls may be contained in the frame while an upper portion of the first wall or of the second wall or of both walls may project from the frame.

Preferably, a bevelled zone may be formed on at least one of the components of the frame. Advantageously, the bevelled zone is formed near the longitudinal axis on at least one of the transverse components.

Preferably, the bevelled zone is formed near the transverse axis on at least one of the longitudinal components. Advantageously, the bevelled zone may be present on both transverse components or on both longitudinal components or on each component of the frame. The bevelled zone may advantageously be used to receive a tool, for example, the tip of a screwdriver, and to promote the removal of the electric module from a potential support, the electric module being combined with the module on which the covering device is mounted.

Preferably, if the module is an electric socket, each hole of the covering device is aligned with a respective opening of the electric socket. The electric module comprises connection elements, each of which is configured so as to be able to be inserted in the receiving member of the respective engagement element of the covering device and to be engaged on the engagement portion of the respective engagement element.

According to the invention, the electric module comprises a box-shaped body which can receive terminals for electric wires and threaded connections which can fix the wires to the terminals.

Preferably, the support surface of the electric module is in contact with the lower surface of the covering device once the device is connected to the module.

Advantageously, the support surface has a shape and dimensions which are compatible with the lower surface of the covering device. Advantageously, the support surface is planar. Advantageously, the support surface comprises two transverse sides, two longitudinal sides and four vertices. Preferably, the support surface is square, even more preferably the shape is substantially rectangular.

Preferably, each connection element is positioned near a respective vertex of the support surface. Preferably, four connection elements are present. Advantageously, the connection elements are positioned so as to be aligned in pairs both in the longitudinal direction and in the transverse direction, defining between them a longitudinal distance and a transverse distance. The distances substantially correspond to the distances defined between the engagement elements of the covering device. Advantageously, the longitudinal distance between the engagement elements of the covering device has approximately the same value as the longitudinal distance between the connection elements of the electric socket. Advantageously, the transverse distance between the engagement elements of the covering device has approximately the same value as the transverse distance between the connection elements of the electric socket.

Advantageously, a first pair of connection elements is opposite and preferably symmetrical relative to a second pair of connection elements with respect to a plane which extends through a longitudinal axis of the support surface and which is perpendicular to the surface.

Advantageously, a third pair of connection elements is opposite and preferably symmetrical relative to a fourth pair of connection elements with respect to a plane which extends through a transverse axis of the support surface and which is perpendicular to the surface.

The longitudinal axis of the support surface is advantageously equidistant from the longitudinal sides of the surface and is located in the plane defined by the surface.

The transverse axis of the support surface is advantageously equidistant from the transverse sides of the surface and is located in the plane defined by the surface.

If present, the frame of the covering device is preferably wrapped around the support surface of the electric module when the covering device is connected to the module.

According to the invention, each connection element preferably comprises a support portion and an engagement portion.

The engagement portion is formed so as to be able to be connected to the engagement portion of the respective engagement element of the covering device.

Each connection element comprises a support portion which extends from a frame of the electric module. The support portion preferably extends perpendicularly relative to the support surface.

In some embodiments, the support portion extends from a peripheral zone of the frame, the zone being positioned around the support surface and under a plane which is defined on the surface. The support portion extends towards the support surface, preferably remaining below the plane defined on the surface.

Preferably, the vertices of the support surface are formed so as to promote the positioning of the respective connection elements by advantageously obtaining between the connection element and the respective vertex a gap which can receive the connection element when it is subjected to resilient deformations.

The resilient deformations advantageously occur during the actions for mounting or dismounting the covering device on/from the electric module and are able to facilitate particularly the operations for mounting or dismounting the covering device on/from the electric module. During the mounting, for example, it is possible to support the covering device on the module and to press it in a substantially perpendicular direction to the direction of the support surface, causing the connection elements to be resiliently deformed towards a centre of the support surface. Preferably, the centre is defined by the intersection of a longitudinal axis and a transverse axis of the support surface. The connection elements will resiliently return to the initial position once the connection has been carried out. During the dismounting operations, for example, it is possible to move the connection device in a direction parallel with the longitudinal axis of the device. Two connection elements are thereby deformed and it will be possible to remove the covering device at the side of the other two connection elements which have not been deformed. This is particularly advantageous in order to dismount the covering device from the module using only one hand.

Advantageously, the vertices of the support surface are bevelled. The bevels of the vertices of the support surface advantageously extend in a direction substantially perpendicular to the support surface. Preferably, the peripheral zone of the frame comprises lateral edges which project outwardly and which can interface with the frame of the covering device, if present, further increasing the stability of the connection between the covering device and electric module.

The gripping portion is at an end of the support portion. The gripping portion is configured so as to be able to be inserted in the receiving member of the respective engagement element of the covering device. Preferably, the gripping portion is configured so as to have a second surface which can come into contact with the first surface of the engagement portion.

The gripping portion is advantageously configured as a protrusion which extends from the support portion. The protrusion advantageously has a bevelled portion which can promote the insertion of the protrusion into the receiving member of the engagement element. Preferably, the bevelled portion interfaces with the oblique edge of the engagement portion during the insertion of the covering device into the electric socket.

Preferably, the protrusion extends towards the exterior of the electric module or in the opposite direction to the centre of the support surface of the module. In this embodiment, the receiving member of the respective engagement element which can receive the gripping portion is preferably accessible at the side directed towards the centre of the lower surface of the covering device.

There are provided alternative embodiments in which the gripping portion is advantageously configured as a protrusion which extends towards the interior of the electric socket or in a direction towards the support surface of the electric module. In this case, the receiving member of the respective engagement element which can receive the gripping portion is preferably accessible at the side opposite the centre of the lower surface of the covering device.

Preferably, the connection elements of the electric module, particularly the support portion, have a specific degree of resilient deformability which promotes the mounting and dismounting of the covering device.

During the connection between the covering device and the electric module, the support portion is advantageously subjected to a resilient deformation which promotes the insertion of the gripping portion into the receiving member of the respective engagement element of the covering device. In this manner, the second surface of the gripping portion of each connection element will advantageously be in contact with the first surface of the engagement portion of the respective engagement element of the covering device. This promotes a particularly stable connection and, at the same time, facilitates the operations for mounting and dismounting the covering device on/from the electric module.

Preferably, the support portion is inclined by a second angle with respect to a plane perpendicular to the support surface of the module and extends along a longitudinal axis of the surface. Advantageously, the value of the second angle is between approximately 30° and 60°, more advantageously it is approximately 45°.

Advantageously, the value of the second angle is substantially the same for the support portion of each connection element.

Preferably, the value of the first angle of the oblique side and consequently of the oblique edge substantially corresponds to the value of the second angle of the respective support portion. The connection between the covering device and the electric socket is thereby facilitated because the connection elements and the respective engagement elements will have the same orientation. In this manner, the Applicant has established that it is possible to further simplify the operations for mounting/dismounting the covering device on/from the electric module. Furthermore, these values allow to provide a particularly stable connection to a respective connection element of the electric module with the engagement portion.

Additional features and additional advantages of the invention will be better appreciated from the following detailed description of a preferred non-limiting embodiment which is illustrated by way of non-limiting example with reference to the appended drawings, in which:
Figure 1 is a view from below of the covering device according to the invention;
Figure 2 is a perspective view of the covering device according to the invention;
Figure 3 is a cross-section of the covering device in the region of an engagement element;
Figure 4 is a view from above of the electric module, to which the covering device according to the invention can be connected;
Figure 5 is a perspective view of the electric module, to which the covering device according to the invention can be connected;
Figure 6 is a perspective view of the electric device according to the invention;
Figure 7 is a cross-section of the socket module.

With reference to the Figures, a covering device which can be removably connected to an electric module 100 is generally designated 1.

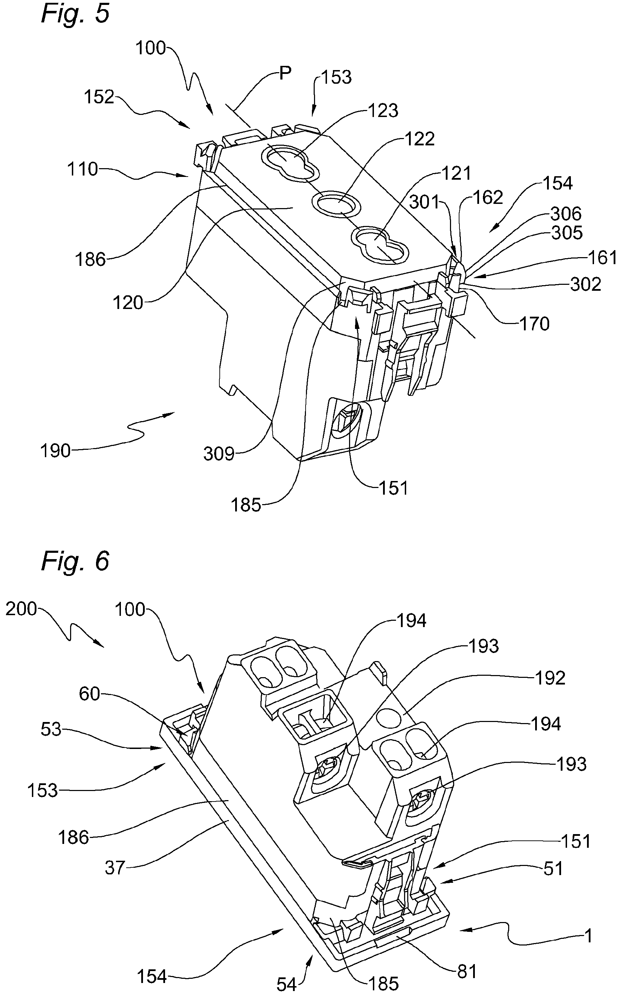

It will be appreciated that the electric module 100 illustrated in the embodiment of Figure 5 is intended to be used in an electric socket, but the same inventive concepts may also be applied to other types of electric modules, such as switches, sensors, ringers, etcetera. For the sake of simplicity of illustration, reference will in any case be made below to the embodiment of an electric socket.

The covering device 1 comprises a body 10 and an engagement system 50.

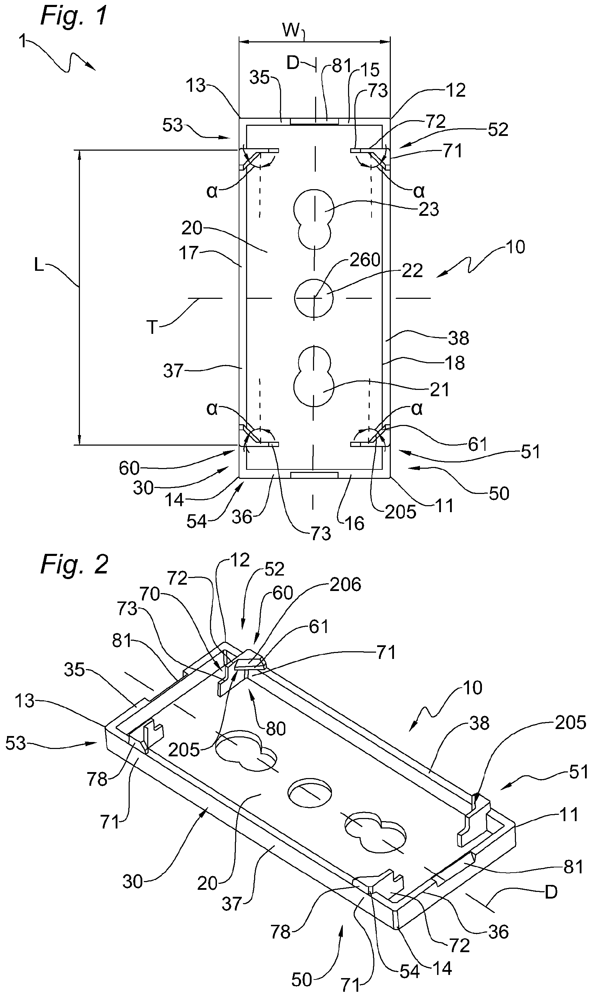

In the embodiment illustrated in Figure 1, the body 10 includes a lower surface 20 which has a substantially rectangular shape and which includes two transverse sides 15, 16, two longitudinal sides 17, 18 and four vertices 11, 12, 13, 14.

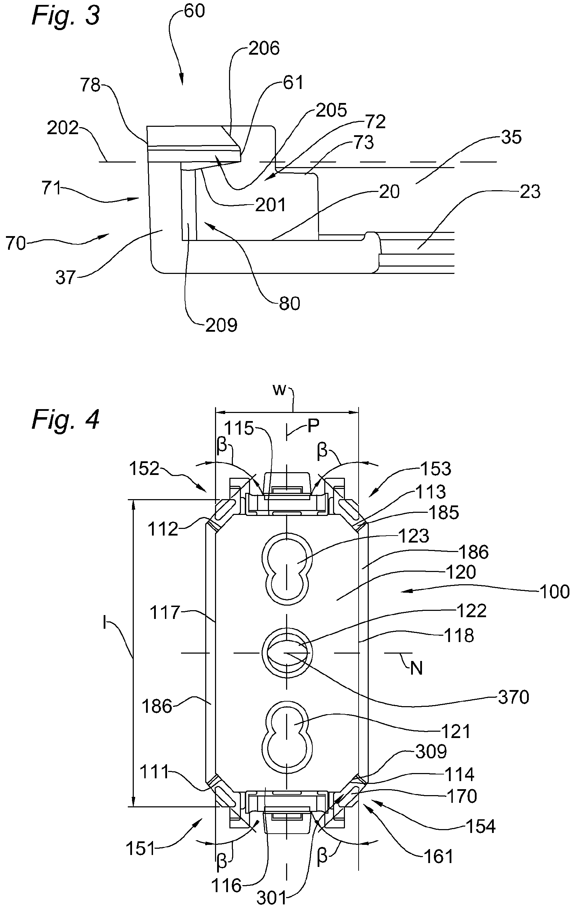

The lower surface 20 extends in a substantially planar manner and has a centre 260 which is defined by the intersection of a longitudinal axis D and a transverse axis T which are defined on the lower surface 20. The longitudinal axis D is equidistant from the longitudinal sides 17, 18 and the transverse axis T is equidistant from the transverse sides 15, 16. This surface 20 can interface with a support surface 120 of the electric module 100 which can be seen in the embodiment of Figures 4 and 5.

If the electric module is a socket, the body 10 may, for example, comprise three holes 21, 22, 23 which are positioned so as to be in alignment with respective openings 121, 122, 123 of the electric socket 100 when the covering device 1 is connected to the electric socket 100. In any case, it is evident that only two holes or a greater number of holes may also be present depending on the type of socket.

The engagement system 50 includes a plurality of engagement elements 51, 52, 53, 54, preferably at least four of them. Each engagement element is positioned near a respective vertex 11, 12, 13, 14 of the body 10.

The engagement elements are preferably positioned so as to be aligned in pairs both in a longitudinal direction and in a transverse direction, defining between them a longitudinal distance L and a transverse distance W.

A first pair of engagement elements 51, 52 may be opposite and symmetrical relative to a second pair of engagement elements 54, 53 with respect to a plane which extends along the longitudinal axis D of the lower surface 20 of the body 10 and which is perpendicular to the surface 20.

A third pair of engagement elements 52, 53 is preferably opposite and symmetrical relative to a fourth pair of engagement elements 51, 54 with respect to a plane which extends along the transverse axis T of the lower surface 20 of the body 10 and which is perpendicular to the surface 20.

Each engagement element 51, 52, 53, 54 comprises an engagement portion 60, a support portion 70 and a receiving member 80.

The engagement portion 60 comprises a first surface 201 which is located in a plane 202 which is substantially parallel with the lower surface 20 of the body 10 of the covering device 1. The first surface 201 comprises an oblique side 205 which is inclined with respect to the longitudinal axis D of the lower surface 20.

As can be seen more clearly in Figure 2, the support portion 70 extends between the lower surface 20 of the body 10 and the engagement portion 60.

The receiving member 80 is delimited by the engagement portion 60, the support portion 70 and the lower surface 20 and is formed so as to allow the insertion of a respective connection element 152, 153, 154, 155 of the electric module 100, this module being illustrated in Figure 4.

With reference to Figures 2 and 3, an oblique edge 61 extends at the oblique side 205 and in a perpendicular direction with respect to the first surface 201.

The oblique edge 61 preferably has a bevel 206 which can facilitate the connection of the covering device 1 to the electric socket 100.

Again with reference to Figure 1, the oblique side 205 is inclined by a first angle α with respect to the longitudinal axis D of the lower surface 20. In some embodiments, the value of the first angle α is approximately 45°. The oblique edge 61 is inclined with respect to a plane which extends along the longitudinal axis D of the lower surface 20 and which is perpendicular to the surface 20. This inclination advantageously corresponds to the value of the above-mentioned first angle α or approximately 45°. The value of the first angle α is substantially the same for the oblique side 205 and consequently the oblique edge 61 of each engagement element 51, 52, 53, 54.

The receiving member 80 is accessible at the side directed towards the centre 260 of the lower surface 20.

The support portion 70 comprises a first wall 71 which is parallel with the longitudinal axis D and a second wall 72 which is perpendicular to the longitudinal axis D and adjacent to the first wall 71. The first wall 71 and the second wall 72 are perpendicular both to the first surface 201 of the engagement portion 60 and to the lower surface 20.

The first wall 71 and the second wall 72 are perpendicular to each other and a connection 209 is preferably constructed between them.

The first surface of the engagement portion 60 has a planar surface which extends parallel with the lower surface 20 of the body 10 and which faces it so as to form the receiving member 80.

In the embodiment illustrated, the second wall 72 includes a channel 73 which is formed at a free end of the wall 72.

Again with reference to Figure 2, the body 10 comprises a frame 30 which projects with respect to the lower surface 20. As may be observed in Figure 1, the frame 30 extends along the sides 15, 16, 17, 18 of the lower surface 20. The frame 30 includes two opposite longitudinal components 37, 38 and two opposite transverse components 35, 36. The frame 30 extends perpendicularly relative to the lower surface 20. The frame is interposed between the lower surface 20 of the body 10 and the plane 202 in which the first surface 201 of the engagement portion 60 is located, as illustrated, for example, in Figure 3.

The first wall 71 of the support portion 70 is partially contained in the longitudinal component 37, 38 of the frame 70, as can better be seen on Figure 3, where it is possible to note an upper zone 78 of the first wall 71 which projects with respect to the longitudinal component 37 of the frame 30.

Both transverse components 35, 36 have a bevelled zone 81 which is formed near the longitudinal axis D on each of the components 35, 36.

The electric module 100 forms part of an electric device 190 which is illustrated in Figures 5 and 6. The electric module 100 comprises a box-shaped body 192 which can receive terminals 194 for electric wires and threaded connections 193 which can fix the wires to the terminals 194.

In the embodiment illustrated, in which the module 100 is an electric socket, it comprises three openings 121, 122, 123 which can receive the pins of a compatible plug. In the case illustrated, the electric socket 100 can receive at least one plug of the Italian standard with two or three aligned pins.

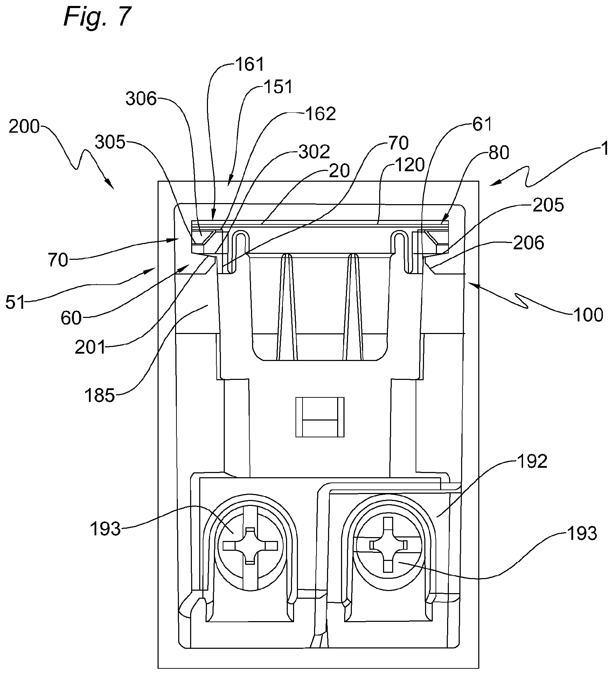

Now with reference also to Figure 4, the support surface 120 of the electric module 100 has a substantially rectangular shape and dimensions which are compatible with the lower surface 20 of the covering device 1. The support surface 120 has two transverse sides 115, 116, two longitudinal sides 117, 118, four vertices 111, 112, 113, 114 and a centre 370 which is defined by the intersection of a longitudinal axis P and a transverse axis N of the support surface 120. When the covering device 1 and the electric socket 100 are connected, as illustrated in Figures 6 and 7, the lower surface 20 of the covering device 1 is directed towards the support surface 120 of the electric socket 100.

Each hole 21, 22, 23 of the covering device 1 can be aligned with a respective opening 121, 122, 123 of the electric socket 100.

The module 100 comprises four connection elements 151, 152, 153, 154, each of which is configured so as to be able to be inserted into the receiving member 80 of the respective engagement element 51, 52, 53, 54 of the covering device 1 and so as to be engaged with the engagement portion 60 of the respective engagement element.

Each connection element 151, 152, 153, 154 is positioned near a respective vertex 111, 112, 113, 114 of the support surface 120. The connection elements 151, 152, 153, 154 are positioned so as to be aligned in pairs both in a longitudinal direction and in a transverse direction, defining between them a longitudinal distance I and a transverse distance w. The distances I, w substantially correspond to the distances L, W which are defined between the engagement elements 51, 52, 53, 54 of the covering device 10.

A first pair of connection elements 151, 152 is opposite and preferably symmetrical relative to a second pair of connection elements 154, 153 with respect a plane which extends along a longitudinal axis P of the support surface 120 and which is perpendicular to the surface 120.

A third pair of connection elements 152, 153 is opposite and preferably symmetrical relative to a fourth pair of connection elements 151, 154 with respect a plane which extends along a transverse axis N of the support surface 120 and which is perpendicular to the surface 120.

The frame 30 of the covering device 1 is wrapped around the support surface 120 of the electric socket 100.

Still with reference to Figure 4, each connection element 151, 152, 153, 154 comprises a support portion 170 and a gripping portion 161.

The support portion 170 extends substantially perpendicularly relative to the support surface 120.

The support portion 170 extends from a peripheral zone 185 of the frame 110, the zone 185 being positioned around the support surface 120 and below a plane which is defined on the surface 120. The support portion 170 extends towards the support surface 120, remaining below the plane defined on the surface 120. The vertices 111, 112, 113, 114 of the support surface 120 are advantageously bevelled and formed so as to promote the at least partial positioning of the connection elements 151, 152, 153, 154 near the bevel 309 of the respective vertex. The bevel 309 extends in a direction substantially perpendicular to the support surface 120.

Each connection element 151, 152, 153, 154 is positioned near the bevel 309 of the respective vertex of the support surface 120.

According to an aspect of the invention, the connection elements are configured so as to be resiliently deformable. In some embodiments, the resilience is produced by means of the support portions 170 which are capable of flexing towards the peripheral zone 185.

There is present between the connection element 151, 152, 153, 154 and the respective bevelled vertex 111, 112, 113, 114 a gap 301 which can better be seen in Figure 5 and which is capable of receiving the connection element when it is subjected to the deformations as a result of the actions for mounting or dismounting the covering device 1 on/from the electric socket 100.

Again with reference to Figure 4, the peripheral zone 185 of the frame 110 comprises lateral edges which project outwards and which interface with the frame 30 of the covering device 1, particularly with the longitudinal components 37, 38 of the frame 30.

The support portion 170 of each connection element 151, 152, 153, 154 is inclined by a second angle β with respect to a plane which is perpendicular to the support surface 120 of the socket 100 and which extends along the longitudinal axis P of the surface 120. The value of the second angle β is approximately 45° and therefore substantially corresponds to the value of the first angle α.

The gripping portion 161 is located at one end 162 of the support portion 170.

Figure 7 is a cross-section of the electric device 200, in particular a section taken along a perpendicular relative to the support surface 120 and parallel with the transverse sides 115, 116 of the surface 120. The gripping portion 161 is configured so as to be able to be inserted into the receiving member 80 of the respective engagement element of the covering device 1. The gripping portion 161 comprises a second surface 302 which is able to move into contact with the first surface 201 of the engagement portion 60.

The gripping portion 161 is advantageously configured as a protrusion 305 which extends from the support portion 170. The protrusion 305 has a bevelled portion 306 which can promote the insertion of the protrusion 305 into the receiving member 80 of the engagement element. In particular, the bevelled portion 306 interfaces with the oblique edge 61 of the engagement portion 60 during the insertion of the covering device 1 in the electric socket 100.

Preferably, the protrusion 305 extends towards the exterior of the electric module 100 or in a direction away with respect to the longitudinal axis P of the support surface 120 of the module 100. In this embodiment, the receiving member 80 of the respective engagement element which can receive the gripping portion 161 is accessible at the side directed towards the openings 21, 22, 23 of the body 10 of the covering device 1.

Advantageously, during the connection between the covering device 1 and the electric module 100, the support portion 170 is subjected to a resilient deformation which promotes the insertion of the gripping portion 161 in the receiving member 80 of the respective engagement element 51, 52, 53, 54 of the covering device 1. In this manner, the second surface 302 of the gripping portion 161 of each connection element 151, 152, 153, 154 will advantageously be in contact with the first surface 201 of the engagement portion 60 of the respective engagement element 51, 52, 53, 54 of the covering device 1. This promotes a particularly stable connection and, at the same time, facilitates the operations for mounting and dismounting the covering device 1 on/from the electric module 100.

## Claims

1. An electric device (200) comprising a wall-mountable electric module (100) and a covering device (1) removably connected to the wall-mountable electric module (100), the electric module (100) including a box-shaped body which can receive terminals for electric wires and threaded connections which can fix the wires to the terminals and wherein the covering device (1) comprises a body (10) and an engagement system (50), the body (10) including a lower surface (20) suitable for interfacing with the electric module (100), the lower surface (20) of the covering device (1) being directed towards a support surface (120) of the electric module (100), wherein said body (10) comprises two transverse sides (15, 16), two longitudinal sides (17, 18) and four vertices (11, 12, 13, 14);
the engagement system (50) including engagement elements (51, 52, 53, 54), each of which being positioned near a respective vertex of the body (10) and comprising:
an engagement portion (60) comprising a first surface (201) which is located in a plane (202) which is substantially parallel with the lower surface (20) of the body (10) of the covering device (1);
a support portion (70) which extends between the lower surface (20) of the main body (10) and the engagement portion (60); and
a receiving member (80) which is delimited by the engagement portion (60), the support portion (70) and the lower surface (20);
**characterized in that** the electric module (100) comprises connection elements (151, 152, 153, 154), each of which being configured so as to be able to be inserted in the receiving member (80) of the respective engagement element (51, 52, 53, 54) of the covering device (1) and to be engaged on the engagement portion (60) of the respective engagement element (51, 52, 53, 54), each connection element (151, 152, 153, 154) comprising a support portion (170) which extends from a frame (110) of the electric module (100), and a gripping portion (161) which is formed to be connectable to the engagement portion (60) of the respective engagement element (51, 52, 53, 54) of the covering device (1).

2. An electric device (200) according to the preceding claim, wherein the first surface (201) comprises an oblique side (205) which is inclined with respect to a longitudinal axis (D) of the lower surface (20), wherein the oblique side (205) is inclined by a first angle (α) with respect to the longitudinal axis (D) of the lower surface (20), the first angle (α) having a value preferably between approximately 30° and 60°.

3. An electric device (200) according to any one of the preceding claims, wherein the receiving member (80) is open at the side directed towards a centre (260) of the lower surface (20) of the body (10) of the covering device (1).

4. An electric device (200) according to any one of the preceding claims, wherein the support portion (70) comprises a first wall (71) which is parallel with the longitudinal axis (D) and a second wall (72) which is perpendicular to the longitudinal axis (D) and which is adjacent to the first wall (71).

5. An electric device (200) according to the preceding claim, when dependent on claim 2, wherein the oblique side (205) extends between the first wall (71) and the second wall (72).

6. An electric device (200) according to any one of the preceding claims, wherein the body (10) comprises a frame (30) which projects with respect to the lower surface (20) and which extends along the sides (15, 16, 17, 18) of the lower surface (20), the frame (30) including two opposite longitudinal components (37, 38) and two opposite transverse components (35, 36).

7. An electric device (200) according to the preceding claim, wherein at least one of the components (35, 36, 37, 38) of the frame (30) comprises a bevelled zone (81).

8. An electric device (200) according to any one of the preceding claims, wherein the electric module (100) is an electric socket, wherein the body comprises a plurality of holes (21, 22, 23) which are positioned at respective openings (121, 122, 123) of the electric socket (100) when the covering device (1) is connected to the electric socket (100), the holes (21, 22, 23) and the openings (121, 122, 123) being configured to receive respective terminals of an electric plug.

9. An electric device (200) according to any one of the preceding claims, wherein the lower surface has a planar development.

10. An electric device (200) according to any one of the preceding claims, wherein a first pair of connection elements (151, 152) is opposite and preferably symmetrical relative to a second pair of connection elements (154, 153) with respect to a plane which extends along a longitudinal axis (P) of the support surface (120) and which is perpendicular to the surface (120).

11. An electric device (200) according to any one of the preceding claims, wherein a third pair of connection elements (152, 153) is opposite and preferably symmetrical relative to a fourth pair of connection elements (151, 154) with respect to a plane which extends along a transverse axis (N) of the support surface (120) and which is perpendicular to the surface (120).

12. An electric device (200) according to any one of the preceding claims, wherein each connection element (151, 152, 153, 154) comprises a support portion (170) which extends from a frame (110) of the electric module (100), and a gripping portion (161) which is formed to be connectable to the engagement portion (60) of the respective engagement element (51, 52, 53, 54) of the covering device (1).

13. An electric device (200) according to the preceding claim, wherein the support portion (170) is inclined by a second angle (β) with respect to a plane perpendicular to the support surface (120) of the socket (100) and extends along a longitudinal axis (P) of the surface (120), the second angle (β) having a value between approximately 30° and 60°, preferably approximately 45°.

14. An electric device (200) according to the preceding claim, wherein the electric module (100) can be mounted on a support which can be fixed to a wall.

15. An electric device (200) according to any one of the preceding claims, wherein the lower surface of the covering device faces the electric module when the covering device is mounted on the module.

## Patentansprüche

1. Elektrische Vorrichtung (200) mit einem an der Wand montierbaren elektrischen Modul (100) und einer Abdeckvorrichtung (1), die entfernbar mit dem an der Wand montierbaren elektrischen Modul (100) verbunden ist, wobei das elektrische Modul (100) einen kastenförmigen Körper umfasst, der Anschlüsse für elektrische Drähte und Gewindeverbindungen aufnehmen kann, mit denen die Drähte an den Anschlüssen befestigt werden können, und wobei die Abdeckvorrichtung (1) einen Körper (10) und ein Eingriffssystem (50) aufweist, wobei der Körper (10) eine untere Fläche (20) umfasst, die zur Verbindung mit dem elektrischen Modul (100) geeignet ist, wobei die untere Fläche (20) der Abdeckvorrichtung (1) in Richtung einer Stützfläche (120) des elektrischen Moduls (100) ausgerichtet ist, wobei der Körper (10) zwei Querseiten (15, 16), zwei Längsseiten (17, 18) und vier Ecken (11, 12, 13, 14) aufweist;
wobei das Eingriffssystem (50) Eingriffselemente (51, 52, 53, 54) umfasst, die jeweils in der Nähe eines entsprechenden Eckpunkts des Körpers (10) positioniert sind und aufweisen:
- einen Eingriffsabschnitt (60) mit einer ersten Fläche (201), die in einer Ebene (202) angeordnet ist, die im Wesentlichen parallel zur unteren Fläche (20) des Körpers (10) der Abdeckvorrichtung (1) ist;
- einen Stützabschnitt (70), der sich zwischen der unteren Fläche (20) des Hauptkörpers (10) und dem Eingriffsabschnitt (60) erstreckt; und
- ein Aufnahmeelement (80), das durch den Eingriffsabschnitt (60), den Stützabschnitt (70) und die untere Fläche (20) begrenzt ist;
**dadurch gekennzeichnet, dass** das elektrische Modul (100) Verbindungselemente (151, 152, 153, 154) aufweist, von denen jedes eingerichtet ist, um in das Aufnahmeelement (80) des jeweiligen Eingriffselements (51, 52, 53, 54) der Abdeckvorrichtung (1) eingesetzt und mit dem Eingriffsabschnitt (60) des jeweiligen Eingriffselements (51, 52, 53, 54) in Eingriff gebracht zu werden, wobei jedes Verbindungselement (151, 152, 153, 154) einen Stützabschnitt (170), der sich von einem Rahmen (110) des elektrischen Moduls (100) erstreckt, und einen Greifabschnitt (161) aufweist, der ausgebildet ist, um mit dem Eingriffsabschnitt (60) des jeweiligen Eingriffselements (51, 52, 53, 54) der Abdeckvorrichtung (1) verbindbar zu sein.

2. Elektrische Vorrichtung (200) nach dem vorhergehenden Anspruch, wobei die erste Fläche (201) eine schräge Seite (205) aufweist, die in Bezug auf eine Längsachse (D) der unteren Fläche (20) geneigt ist, wobei die schräge Seite (205) um einen ersten Winkel (α) in Bezug auf die Längsachse (D) der unteren Fläche (20) geneigt ist, wobei der erste Winkel (α) vorzugsweise einen Wert zwischen etwa 30° und 60° aufweist.

3. Elektrische Vorrichtung (200) nach einem der vorhergehenden Ansprüche, wobei das Aufnahmeelement (80) an der Seite offen ist, die in Richtung einer Mitte (260) der unteren Fläche (20) des Körpers (10) der Abdeckvorrichtung (1) ausgerichtet ist.

4. Elektrische Vorrichtung (200) nach einem der vorhergehenden Ansprüche, wobei der Stützabschnitt (70) eine erste Wand (71), die parallel zur Längsachse (D) ist, und eine zweite Wand (72) aufweist, die senkrecht zur Längsachse (D) ist und an die erste Wand (71) angrenzt.

5. Elektrische Vorrichtung (200) nach einem der vorhergehenden Ansprüche, wenn von Anspruch 2 abhängig, wobei sich die schräge Seite (205) zwischen der ersten Wand (71) und der zweiten Wand (72) erstreckt.

6. Elektrische Vorrichtung (200) nach einem der vorhergehenden Ansprüche, wobei der Körper (10) einen Rahmen (30) aufweist, der in Bezug auf die untere Fläche (20) hervorsteht und sich entlang der Seiten (15, 16, 17, 18) der unteren Fläche (20) erstreckt, wobei der Rahmen (30) zwei gegenüberliegende Längskomponenten (37, 38) und zwei gegenüberliegende Querkomponenten (35, 36) umfasst.

7. Elektrische Vorrichtung (200) nach einem der vorhergehenden Ansprüche, wobei zumindest eine der Komponenten (35, 36, 37, 38) des Rahmens (30) einen abgeschrägten Bereich (81) aufweist.

8. Elektrische Vorrichtung (200) nach einem der vorhergehenden Ansprüche, wobei das elektrische Modul (100) eine Steckdose ist, wobei der Körper eine Mehrzahl von Löchern (21, 22, 23) aufweist, die an entsprechenden Öffnungen (121, 122, 123) der elektrischen Steckdose (100) positioniert sind, wenn die Abdeckvorrichtung (1) mit der elektrischen Steckdose (100) verbunden ist, wobei die Löcher (21, 22, 23) und Öffnungen (121, 122, 123) eingerichtet sind, um jeweilige Anschlüsse eines elektrischen Steckers aufzunehmen.

9. Elektrische Vorrichtung (200) nach einem der vorhergehenden Ansprüche, wobei die untere Fläche eine ebene Ausdehnung aufweist.

10. Elektrische Vorrichtung (200) nach einem der vorhergehenden Ansprüche, wobei ein erstes Paar von Verbindungselementen (151, 152) gegenüberliegend und vorzugsweise symmetrisch relativ zu einem zweiten Paar von Verbindungselementen (154, 153) in Bezug auf eine Ebene angeordnet ist, die sich entlang einer Längsachse (P) der Stützfläche (120) erstreckt und senkrecht zur Fläche (120) ist.

11. Elektrische Vorrichtung (200) nach einem der vorhergehenden Ansprüche, wobei ein drittes Paar von Verbindungselementen (151, 152) gegenüberliegend und vorzugsweise symmetrisch relativ zu einem vierten Paar von Verbindungselementen (154, 153) in Bezug auf eine Ebene angeordnet ist, die sich entlang einer Querachse (N) der Stützfläche (120) erstreckt und senkrecht zur Fläche (120) ist.

12. Elektrische Vorrichtung (200) nach einem der vorhergehenden Ansprüche, wobei jedes Verbindungselement (151, 152, 153, 154) einen Stützabschnitt (170), der sich von einem Rahmen (110) des elektrischen Moduls (100) erstreckt, und einen Greifabschnitt (161) aufweist, der ausgebildet ist, um mit dem Eingriffsabschnitt (60) des jeweiligen Eingriffselements (51, 52, 53, 54) der Abdeckvorrichtung (1) verbindbar zu sein.

13. Elektrische Vorrichtung (200) nach dem vorhergehenden Anspruch, wobei der Stützabschnitt (170) um einen zweiten Winkel (β) in Bezug auf eine Ebene senkrecht zur Stützfläche (120) der Steckdose (100) geneigt ist und sich entlang einer Längsachse (P) der Fläche (120) erstreckt, wobei der zweite Winkel (β) einen Wert zwischen etwa 30° und 60°, vorzugsweise etwa 45°, aufweist.

14. Elektrische Vorrichtung (200) nach dem vorhergehenden Anspruch, wobei das elektrische Modul (100) an einer Halterung montiert werden kann, die an einer Wand befestigt werden kann.

15. Elektrische Vorrichtung (200) nach einem der vorhergehenden Ansprüche, wobei die untere Fläche der Abdeckvorrichtung dem elektrischen Modul zugewandt ist, wenn die Abdeckvorrichtung am Modul montiert ist.

## Revendications

1. Dispositif électrique (200) comprenant un module électrique mural (100) et un dispositif de recouvrement (1) connecté de manière amovible au module électrique mural (100), le module électrique (100) comprenant un corps en forme de boîte qui peut recevoir des bornes pour les fils électriques et des raccords filetés qui peuvent fixer les fils aux bornes et dans lequel le dispositif de recouvrement (1) comprend un corps (10) et un système d'engagement (50), le corps (10) comprend une surface inférieure (20) adaptée à l'interface avec le module électrique (100), la surface inférieure (20) du dispositif de recouvrement (1) étant orientée vers une surface de support (120) du module électrique (100), ledit corps (10) comprenant deux côtés transversaux (15, 16), deux côtés longitudinaux (17, 18) et quatre sommets (11, 12, 13, 14) ;
le système d'engagement (50) comprenant des éléments d'engagement (51, 52, 53, 54), chacun étant positionné près d'un sommet respectif du corps (10) et comprenant :
une partie d'engagement (60) comprenant une première surface (201) située dans un plan (202) sensiblement parallèle à la surface inférieure (20) du corps (10) du dispositif de recouvrement (1) ;
une partie de support (70) qui s'étend entre la surface inférieure (20) du corps principal (10) et la partie d'engagement (60) ; et
un élément de réception (80) délimité par la partie d'engagement (60), la partie de support (70) et la surface inférieure (20) ;
**caractérisé en ce que** le module électrique (100) comprend des éléments de connexion (151, 152, 153, 154), chacun étant configuré de manière à pouvoir être inséré dans l'élément de réception (80) de l'élément d'engagement (51, 52, 53, 54) respectif du dispositif de recouvrement (1) et à être engagé sur la partie d'engagement (60) de l'élément d'engagement (51, 52, 53, 54) respectif, chaque élément de connexion (151, 152, 153, 154) comprenant une partie de support (170) qui s'étend à partir d'un cadre (110) du module électrique (100), et une partie de préhension (161) qui est formée pour être connectée à la partie d'engagement (60) de l'élément d'engagement (51, 52, 53, 54) respectif du dispositif de recouvrement (1).

2. Dispositif électrique (200) selon la revendication précédente, dans lequel la première surface (201) comprend un côté oblique (205) qui est incliné par rapport à un axe longitudinal (D) de la surface inférieure (20), dans lequel le côté oblique (205) est incliné d'un premier angle (α) par rapport à l'axe longitudinal (D) de la surface inférieure (20), le premier angle (α) ayant une valeur de préférence comprise entre environ 30° et 60°.

3. Dispositif électrique (200) selon l'une quelconque des revendications précédentes, dans lequel l'élément de réception (80) est ouvert du côté orienté vers un centre (260) de la surface inférieure (20) du corps (10) du dispositif de recouvrement (1).

4. Dispositif électrique (200) selon l'une quelconque des revendications précédentes, dans lequel la partie de support (70) comprend une première paroi (71) parallèle à l'axe longitudinal (D) et une seconde paroi (72) perpendiculaire à l'axe longitudinal (D) et adjacente à la première paroi (71).

5. Dispositif électrique (200) selon la revendication précédente, lorsqu'il dépend de la revendication 2, dans lequel le côté oblique (205) s'étend entre la première paroi (71) et la seconde paroi (72).

6. Dispositif électrique (200) selon l'une quelconque des revendications précédentes, dans lequel le corps (10) comprend un cadre (30) qui fait saillie par rapport à la surface inférieure (20) et qui s'étend le long des côtés (15, 16, 17, 18) de la surface inférieure (20), le cadre (30) comprenant deux composants longitudinaux opposés (37, 38) et deux composants transversaux opposés (35, 36).

7. Dispositif électrique (200) selon la revendication précédente, dans lequel au moins un des composants (35, 36, 37, 38) du cadre (30) comprend une zone biseautée (81).

8. Dispositif électrique (200) selon l'une quelconque des revendications précédentes, dans lequel le module électrique (100) est une prise électrique, dans lequel le corps comprend une pluralité de trous (21, 22, 23) qui sont positionnés au niveau des ouvertures respectives (121, 122, 123) de la prise électrique (100) lorsque le dispositif de recouvrement (1) est connecté à la prise électrique (100), les trous (21, 22, 23) et les ouvertures (121, 122, 123) étant configurés pour recevoir les bornes respectives d'une fiche électrique.

9. Dispositif électrique (200) selon l'une quelconque des revendications précédentes, dans lequel la surface inférieure présente un développement planaire.

10. Dispositif électrique (200) selon l'une quelconque des revendications précédentes, dans lequel une première paire d'éléments de connexion (151, 152) est opposée et de préférence symétrique par rapport à une deuxième paire d'éléments de connexion (154, 153) par rapport à un plan qui s'étend le long d'un axe longitudinal (P) de la surface de support (120) et qui est perpendiculaire à la surface (120).

11. Dispositif électrique (200) selon l'une quelconque des revendications précédentes, dans lequel une troisième paire d'éléments de connexion (152, 153) est opposée et de préférence symétrique par rapport à une quatrième paire d'éléments de connexion (151, 154) par rapport à un plan qui s'étend le long d'un axe transversal (N) de la surface de support (120) et qui est perpendiculaire à la surface (120).

12. Dispositif électrique (200) selon l'une quelconque des revendications précédentes, dans lequel chaque élément de connexion (151, 152, 153, 154) comprend une partie de support (170) qui s'étend à partir d'un cadre (110) du module électrique (100), et une partie de préhension (161) qui est formée pour être connectée à la partie d'engagement (60) de l'élément d'engagement (51, 52, 53, 54) respectif du dispositif de recouvrement (1).

13. Dispositif électrique (200) selon la revendication précédente, dans lequel la partie de support (170) est inclinée d'un second angle (13) par rapport à un plan perpendiculaire à la surface de support (120) de la prise (100) et s'étend le long d'un axe longitudinal (P) de la surface (120), le second angle (13) ayant une valeur comprise entre environ 30° et 60°, de préférence environ 45°.

14. Dispositif électrique (200) selon la revendication précédente, dans lequel le module électrique (100) peut être monté sur un support qui peut être fixé à un mur.

15. Dispositif électrique (200) selon l'une quelconque des revendications précédentes, dans lequel la surface inférieure du dispositif de recouvrement fait face au module électrique lorsque le dispositif de recouvrement est monté sur le module.
